# EUROPEAN PATENT APPLICATION

(11) **EP 1 982 893 A2**
(43) Date of publication of application: **22.10.2008**
(21) Application number: 08154819.0
(22) Date of filing: 18.04.2008
(51) Int. Cl.: B62B 1/12

(54) **Portable carrier/table device**

(30) Priority: 18.04.2007 AR A070101648
(71) Applicant: Chianale, Hugo Enrique, B1824AAL Buenos Aires (AR)
(72) Inventor: Chianale, Hugo Enrique, B1824AAL Buenos Aires (AR)
(74) Representative: Intes, Didier Gérard André

(57) **Abstract**

A portable carrier/table device (1), comprising: :
a table (2) with a stop (3) and a hinge (4), said device (1) being able to adopt a folded configuration, a carrying cart configuration, a carrying cart support configuration or a table configuration;
a first pair of bars (5) pivotally coupled to said hinge (4), the ends thereof being mutually connected by means of an axis (6) with wheels (7);
a second pair of bars (8) located underneath and pivotally coupled at the middle point (9) of said first pair of bars (5), and joined by a first crossbar (11);
a third pair of bars (12) located over and pivotally coupled to said first pair of bars (5), between said middle point (9) and said axis (6), and joined by a second crossbar (14); and
a fourth pair of bars (15) located within said first pair of bars (5), pivotally coupled in the vicinity of said hinge (4), and joined by a third crossbar (17).

## Description

The present invention refers to a portable carrier/table device (or carrier/table set). More specifically, the present invention refers to a foldable device able to be transformed both into a carrying cart (i.e. a transport carriage) and into a table, particularly a beach table.

Document AR 36200 A1 discloses a beach carrier/table device bearing two wheels, able to adopt three positions by means of a system of indented hinges which allow movement of two pairs of parallel supporting arms. When folded, said beach carrier/table size is reduced and thus can be stored.

Document US 6152462 discloses a convertible hand-held carrier for equipment transport. Said carrier bears three independent pivoting articulated elements. These articulated elements allow the carrier to adopt five different configurations: a folded one, a carrying one, a hand-held one, a sloped table one, and a standing table one.

Patent application P060104259 of the same Applicant substantially reduces articulations of the previous art, thus a simpler carrier/table device is obtained which adopts folding, carrying cart, carrying cart support and table configurations, it being less prone to breakages and/or articulations seizing, and further, it is less expensive as the number of pieces used is lower. Also, and due to the novel combination of used means, voluminous objects can be easily transported and supported.

Based on the above device, Applicant has developed a new portable carrier/table device including fewer mobile parts and elements, which represents a significant reduction of costs as well as of pieces wearing, its handling thence being easier.

Accordingly, the object of the present invention consists of a portable carrier/table device comprising:
a table consisting of a top surface, a bottom surface and a peripheral edge, the bottom surface of said table comprising a stop and at least one hinge, said device being able to adopt a folded configuration, a carrying cart configuration, a carrying cart support configuration, or a table configuration;
a first pair of bars, wherein the ends thereof are respectively and pivotally coupled to said at least one hinge, and wherein the other ends are mutually connected by means of an axis on which a pair of wheels is mounted in a rotary fashion;
a second pair of bars located under, and pivotally coupled through one of their ends in the vicinity of the middle point of said first pair of bars, by means of a first coupling element, the other end thereof being joined by means of a first crossbar;
a third pair of bars located over and pivotally coupled through one of their ends to said first pair of bars in a certain point between said middle point and said axis by means a second coupling element, the other ends being mutually joined through a second crossbar; and
a fourth pair of bars located within the space defined by said first pair of bars, pivotally coupled through one of the ends thereof in the vicinity of said at least one hinge by means of a third coupling element, and the other ends thereof being joined by means of a third crossbar.

The invention will be even better understood in view of the following drawings, in which:
Figure 1 is a perspective view of the portable carrier/table device according to the invention.
Figure 2 is a view of the portable carrier/table device of the invention adopting the folded configuration.
Figure 3 is a view of the portable carrier/table device of the invention adopting the carrying cart or carrying cart support configuration.
Figure 4 is a view of the portable carrier/table device of the invention adopting the table configuration.

### Detailed description of the invention

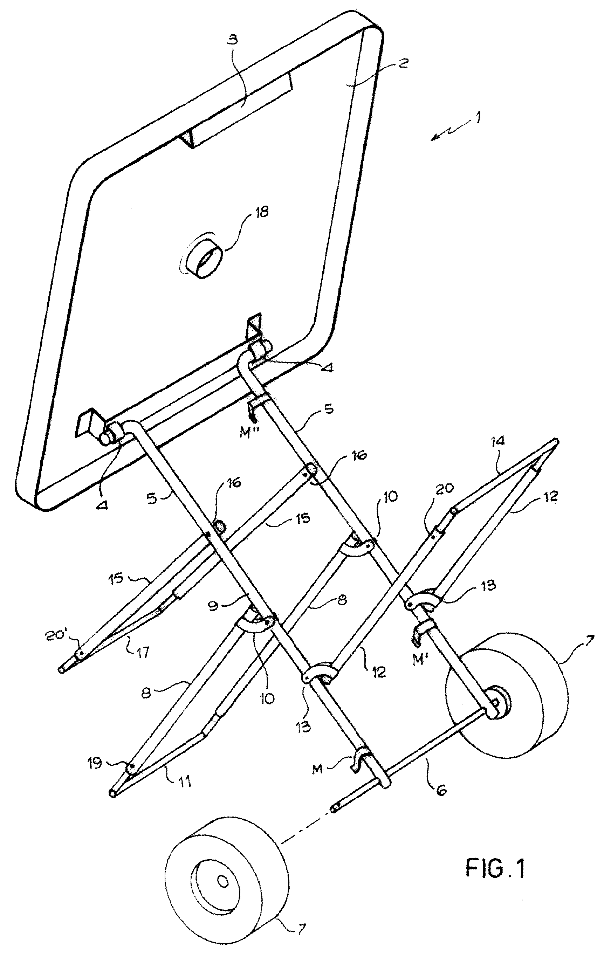

Figure 1 illustrates a portable carrier/table device 1 comprising a table 2 featuring a top surface, a bottom surface and a peripheral edge in between, a front portion and a rear portion, a stop 3 which is attached to said bottom surface in the vicinity of the front portion of said table, and at least one hinge 4 attached to said bottom surface in the vicinity of the rear portion of said table 2, said device 1 being able to adopt a folded configuration, a carrying cart configuration or carrying cart support configuration, and a table configuration, all of which will be detailed below.

Said table 2 is associated to a first pair of bars 5, the first ends of said bars 5 being respectively and pivotally coupled to said at least one hinge 4, and their second ends being mutually joined by means of an axis 6 on which a pair of wheels 7 is mounted in a rotary fashion.

Said first pair of bars 5 is associated to a second pair of bars 8, said second pair of bars being placed underneath, and pivotally coupled through one of their ends in the vicinity of a middle point 9 of said first pair of bars 5 by means of a first coupling element 10, their other ends being joined together by means of a first crossbar 11. Said first crossbar 11 may be attached to said other ends, or may be telescopically coupled thereto, in which case there are included first locking means 19 in order to allow height regulation of said first crossbar 11.

A third pair of bars 12 is pivotally coupled over said first pair of bars 5 and through one of the ends thereof at a certain point between said middle point 9 and said axis 6 by means of a second coupling element 13, said third pair of bars 12 being able to pivot towards the front portion of said table 2. The other ends thereof are joined together by means of a second crossbar 14. Said second crossbar 14 may be attached to said other ends, or telescopically coupled thereto, in which case second locking means 20 are included in order to allow height regulation of said second crossbar 14.

Lastly, a fourth pair of bars 15 is located within the space defined by said first pair of bars 5, pivotally coupled through one of the ends thereof in the vicinity of said at least one hinge 4 by means of a third coupling element 16, and the other ends thereof being joined by means of a third crossbar 17. Said third crossbar 17 may be attached to said other ends or telescopically attached to them, in which case second locking means 20' are included in order to allow height regulation of said third crossbar 17.

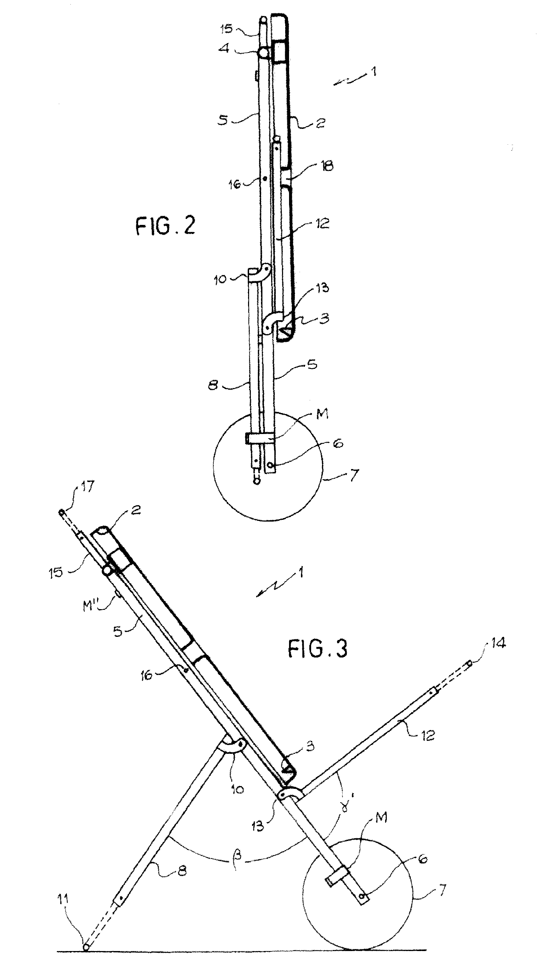

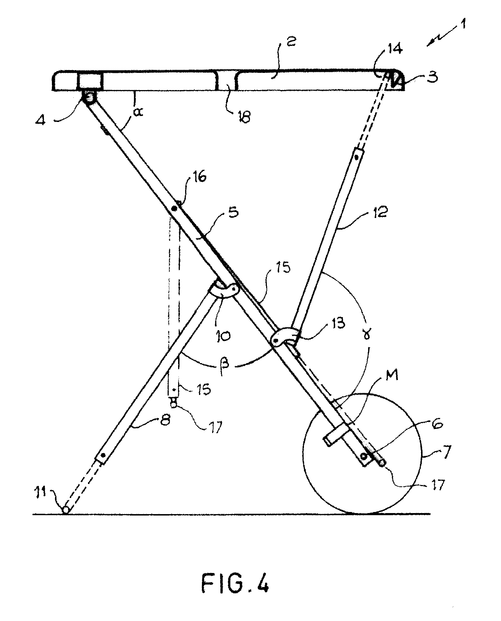

Figures 2 and 3 show that said first pair of bars 5 forms an angle of 0° with said table 2 when said device 1 adopts the folded configuration, the carrying cart configuration or the carrying cart support configuration. On the other hand, as can be seen in Figure 4, said first pair of bars 5 forms a substantially acute angle α with said table 2 when said device 1 adopts the table configuration.

As can also be seen on Figures 2 and 3, said second pair of bars 8 forms an angle of 0° with said table 2 when said device 1 adopts the folded configuration or the carrying cart configuration. Optionally, in these configurations said second pair of bars 8 may be attached by means of a first elastic clamp M provided on said first pair of bars 5, in the vicinity of said axis 6. On the other hand said second pair of bars 8 forms a substantially right angle β with said table 2 when said device adopts the table or carrying cart support configuration.

Figure 3 shows the manner in which said first crossbar 11 telescopically slides outwards from said one of the ends of said second pair of bars 8, when said device 1 adopts the table or carrying cart support configuration, should it be necessary to regulate the height of the device 1. Likewise, said first crossbar 11 remains positioned underneath said axis 6 when said device 1 adopts the folded configuration, or the carrying cart configuration such as illustrated by Figures 2 and 3.

Said third pair of bars 12 forms an angle of 180° with said first pair of bars 5 when said device 1 adopts the folded configuration, as illustrated by Figure 2, or forms a substantially obtuse angle γ with said first pair of bars 5 when said device 1 adopts the table configuration, as can be seen on Figure 4, or a substantially right angle γ' with said first pair of bars 5 when said device 1 adopts the carrying cart support configuration, as illustrated by Figure 3.

Said fourth pair of bars 15 forms an angle of 0° with said first pair of bars 5 when said device 1 adopts the folded configuration, as can be observed on Figure 2; it forms an angle of 180° with said first pair of bars 5 when said device adopts the carrying cart configuration, as shown on Figure 3, or else it forms an angle of 90° with the floor, or said third crossbar 17 telescopically slides surpassing over said axis 6 in order that said fourth pair of bars 15 be supported by it when said device 1 adopts the table configuration or the carrying cart support configuration. Optionally, and as can be seen on Figures 1 and 4, said fourth pair of bars 15 may be attached to said first pair of bars 5 by means of second and third elastic clamps M' and M" respectively located in the vicinity of said axis 6, or in the vicinity of said at least one hinge 4, when said device 1 adopts the table configuration or the carrying cart support configuration, or to make its handling easier when device 1 adopts the carrying cart configuration, respectively.

Further, bars conforming said first, second, third and fourth pair of bars 5, 8, 12, 15 are substantially parallel among each other.

Finally, it is to be noted that said table 2 may have a central opening 18 (see Figures 1 and 4) able to accommodate a sun protection element, such as a beach umbrella (not shown).

All of the elements comprised in device 1, which is the object of the invention, should be highly resistant and durable, especially corrosion-resistant.

## Claims

1. A portable carrier/table device (1), **characterized in that** it comprises:
a table (2) comprising a top surface, a bottom surface and a peripheral edge, the bottom surface of said table (2) comprising a stop (3) and at least one hinge (4), said device (1) being able to adopt a folded configuration, a carrying cart configuration, a carrying cart support configuration or a table configuration;
a first pair of bars (5), the first ends of said first pair of bars (5) being respectively and pivotally coupled to said at least one hinge (4), and the second ends of said first pair of bars (5) being mutually connected by means of an axis (6) on which a pair of wheels (7) is mounted in a rotary fashion;
a second pair of bars (8) located underneath, and pivotally coupled through one of their ends in the vicinity of a middle point (9) of said first pair of bars (5) by means of a first coupling element (10), the other ends thereof being joined by means of a first crossbar (11);
a third pair of bars (12) located over and pivotally coupled through one of their ends to said first pair of bars (5) in a certain point between said middle point (9) and said axis (6) by means a second coupling element (13), the other ends thereof being mutually joined by means of a second crossbar (14); and
a fourth pair of bars (15) located within the space defined by said first pair of bars (5), pivotally coupled through one of their ends in the vicinity of said at least one hinge (4) by means of a third coupling element (16), and the other end thereof being joined by means of a third crossbar (17).

2. The device according to claim 1, **characterized in that** said first pair of bars (5) forms an angle of 0° with said table (2) when said device (1) adopts a folded configuration, a carrying cart configuration or a carrying cart support configuration, or it forms a substantially acute angle (α) with said table (2) when said device (1) adopts the table configuration.

3. The device according to claim 1 or 2, **characterized in that** said second pair of bars (8) forms an angle of 0° with said table (2) when said device (1) adopts the folded configuration or the carrying cart configuration; or a substantially right angle (β) with said first pair of bars (5) when said device (1) adopts the table configuration or the carrying cart support configuration.

4. The device according to claim 3, **characterized in that** in the folded configuration or the carrying cart configuration, said second pair of bars (8) is attached to said first pair of bars (5) by means of a first elastic clamp (M) provided on said first pair of bars (5), in the vicinity of said axis (6).

5. The device according to any one of claims 1 to 4, **characterized in that** said third pair of bars (12) forms an angle of 180° with said first pair of bars (5) when said device (1) adopts the folded configuration; a substantially obtuse angle (γ) with said first pair of bars (5) when said device (1) adopts the table configuration, and a substantially right angle (γ') with said first par of bars (5) when said device (1) adopts the carrying cart configuration or the carrying cart support configuration.

6. The device according to any one of claims 1 to 5, **characterized in that** said fourth pair of bars (15) forms an angle of 0° with said first pair of bars (5) when said device (1) adopts the folded configuration; an angle of 180° with said first pair of bars (5) when said device adopts the carrying cart configuration; or else it forms an angle of 90° with the floor, or said third crossbar (17) telescopically slides surpassing over said axis (6) so that said fourth pair of bars (15) is supported by said third crossbar (17) when said device (1) adopts the carrying cart support configuration or the table configuration.

7. The device according to claim 6, **characterized in that** said fourth pair of bars (15) is attached to said first pair of bars (5) by means of second and third elastic clamps (M',M") respectively located in the vicinity of said axis (6) or in the vicinity of said at least one hinge (4), when said device (1) adopts the table configuration or the carrying cart support configuration, or to make its handling easier when device (1) adopts the carrying cart configuration, respectively.

8. The device according to any one of claims 1 to 7, **characterized in that** said first crossbar (11) is attached to the ends of said second pair of bars (8), or is able to telescopically slide outwards from same, including in this last case first locking means (19) in order to allow height regulation of said device (1).

9. The device according to any one of claims 1 to 8, **characterized in that** said second crossbar (14) is attached to the ends of said third pair of bars (12), or is able to telescopically slide outwards from same, including in this last case second locking means (20) in order to allow height regulation of said device (1).

10. The device according to any one of claims 1 to 9, **characterized in that** said third crossbar (17) is attached to the ends of said fourth pair of bars (15), or is able to telescopically slide outwards from same, including in this last case, third locking means (20') in order to allow height regulation of said device (1).

11. The device according to any one of claims 1 to 10, **characterized in that** bars of said first, second, third and fourth pairs of bars (5,8,12,15) are substantially parallel among each other.

12. The device according to any one of claims 1 to 11, **characterized in that** said table (2) has a central opening (18) able to accommodate a solar protection element, for instance a beach umbrella.

13. The device according to any one of claims 1 to 12, **characterized in that** said device (1) is manufactured from highly resistant and durable material, especially corrosion-resistant material.
